# EUROPEAN PATENT APPLICATION

(11) **EP 2 108 866 A2**
(43) Date of publication of application: **14.10.2009**
(21) Application number: 09250795.3
(22) Date of filing: 20.03.2009
(51) Int. Cl.: F16K 1/226, F02B 37/013, F02B 37/18

(54) **Butterfly valve**

(30) Priority: 09.04.2008 GB 0806401
(71) Applicant: Cummins Turbo Technologies Limited, St. Andrews Road Huddersfield HD1 6RA (GB)
(72) Inventor: McEwen, Jim, Rastrick, Brighouse West Yorkshire HD6 3US (GB); Robinson, Lee Jonathan, Stainland, Halifax West Yorkshire HX4 9EF (GB); Bywater, John Michael, Crosland Moor Huddersfield HD4 5LG (GB)
(74) Representative: Holmes, Matthew Peter

(57) **Abstract**

A butterfly valve comprises a housing defining a fluid flow conduit and a butterfly valve member supported on a shaft for rotation about an axis extending across said conduit to control fluid flow through said conduit. A portion of the shaft extends into a shaft bore provided in the bossing and which extends laterally from said conduit An annular bush is located around theshaft within the bore and is coupled to the butterfly valve member for rotation therewith about the shaft axis.

## Description

The present invention relates to a butterfly valve for controlling fluid flow through a conduit. Particularly, but not exclusively, the invention provides a butterfly valve suitable for controlling air flow to the compressor of a turbocharger. The butterfly valve may for instance be used in a multi-stage turbocharger system to control air flow from an upstream turbocharger compressor through a bypass flow path around a downstream turbocharger compressor turbocharger.

A multi-stage turbocharger system may comprise a relatively small high-pressure turbocharger connected in series to a relatively large low-pressure turbocharger such that exhaust gas from an engine flows first through the smaller turbocharger turbine and then through the larger turbocharger turbine. Exhaust gas may be allowed to bypass the high pressure turbine in some operating conditions such as at high engine speeds. Similarly, air is supplied to an inlet of the engine via first the large turbocharger and then the smaller turbocharger. A valve controlled bypass passage may be provided for selectively allowing the inlet air to bypass the high-pressure turbocharger compressor under certain operating conditions such as at high engine speeds and/or loads. In such an application it is important that the butterfly valve provides a good gas tight seal when fully closed (so that all air flow is diverted through the high pressure compressor). If the valve allows any leakage flow when in a closed configuration, some of the relatively hot high-pressure air flow from the high pressure compressor can recirculate to the high pressure turbine inlet. This can significantly reduce efficiency and increase the thermal loading on the high-pressure compressor.

It is known to use a butterfly valve in such applications to control the flow through the high pressure compressor bypass path. A butterfly valve generally comprises a valve housing defining a fluid flow conduit with a butterfly valve member rotatably mounted within the conduit on an actuator shaft which may for instance extend across the conduit and rotate in diametrically opposed bores which extend laterally into the housing. The butterfly valve member typically comprises a disc (butterfly plate) having "wings" extending laterally from the shaft axis which is rotatable about the shaft axis to adjust the effective cross section of the conduit through which fluid may flow past the butterfly valve member. For instance the valve member may be moveable between a fully closed position in which the butterfly plate is orientated substantially perpendicular to the flow path (i.e. conduit) to at least substantially block flow through the conduit, and a fully open position in which the butterfly plate is orientated substantially along the flow path (i.e. axis of the conduit) to present a minimum obstruction to flow through the conduit. Typically the valve member can be selectively positioned between fully closed and fully open positions to modulate flow through the conduit.

It will be appreciated that the periphery of the butterfly plate furthest from the axis of the shaft will move towards and away from the wall of the conduit as the butterfly plate is rotated. The periphery of the butterfly plate closest to the axis however will move substantially parallel to the conduit wall. The need to accommodate the sweep of the butterfly valve plate in this region makes sealing difficult, particularly in a high temperature environment where there may be differential expansion between the butterfly valve plate and the valve housing. This is thus a disadvantage of butterfly valves in many applications such as for instance the turbocharger bypass valve application described above.

It is an object of the present invention to provide a valve which obviates or mitigates the above disadvantage.

According to the present invention there is provided a butterfly valve comprising:
a housing defining a fluid flow conduit;
a butterfly valve member supported on a shaft for rotation about an axis extending across said conduit to control fluid flow through said conduit;
a portion of said shaft extending into a shaft bore provided in said housing and extending laterally from said conduit; and
an annular bush located around said shaft within said bore;
wherein said bush is coupled to the butterfly valve member for rotation therewith about said axis.

The coupling between the butterfly valve member and the bush eliminates rotational movement between the two, which may provide a location for leakage flow past the valve member. With the present invention the bush may be coupled to the butterfly valve member so as to substantially prevent fluid flow between the bush and the butterfly valve member.

Alternatively, the shaft may extend across the conduit along said axis from one laterally extending bore to an opposite laterally extending bore, an annular bush being disposed around the shaft within each bore, the or each bush being coupled to the butterfly valve for rotation therewith. The shaft may be an actuating shaft which is rotatably supported within the shaft bores, and linked to a suitable actuator for rotation of the shaft and thus butterfly valve member.

Alternatively, the butterfly valve member may be rotatably supported on a first shaft extending into a first bore extending laterally from the conduit, and a second shaft extending into a second bore extending laterally from said conduit opposite said first bore, first and second annular bushes being disposed between said first and second shafts within said first and second bores, the or each bush being coupled to the butterfly valve member for rotation therewith. The shafts may be rotatably supported within the bores and one of the shafts may be linked to an appropriate actuator for rotating the shaft and butterfly valve member.

Alternatively, the shaft of shafts may be fixed spindles about which the butterfly valve member rotates. In such embodiments an appropriate actuator may be linked to the or each bush in order to rotate the butterfly valve member about the shaft or shafts.

An end portion of the or each each bush may extend into said conduit.

An end portion of the or each bush may overlap the butterfly valve member.

An end portion of the or each bush may be keyed to the butterfly valve member.

In one embodiment the butterfly valve member comprises a butterfly plate defining a peripheral edge, and an end portion of the or each bush is provided with a slot configured to receive a portion of said peripheral edge.

Resilient biasing means may be provided for urging the or each bush into contact with the butterfly valve member. The resilient biasing means may for instance comprise a spring (such as a wove spring for example) positioned within the or each bore for biasing a respective bush.

The present invention also provides a turbocharger system comprising:
a first relatively small turbocharger;
a second relatively large turbocharger;
the first turbocharger comprising a first compressor situated in a first air conduit;
the second tubocharger comprising a second compressor situated in said first air conduit downstream of said first compressor;
an air bypass conduit comunicating with said first air conduit upstream and downstream of said first compressor; and
a butterfly valve according to the present invention located in the bypass conduit for controlling air flow through the bypass conduit.

Other preferred and advantageous features of the various aspects of the present invention will be apparent from the following description.

Specific embodiments of the present invention will now be described, by way of example only, with reference to the accompany drawings, in which:

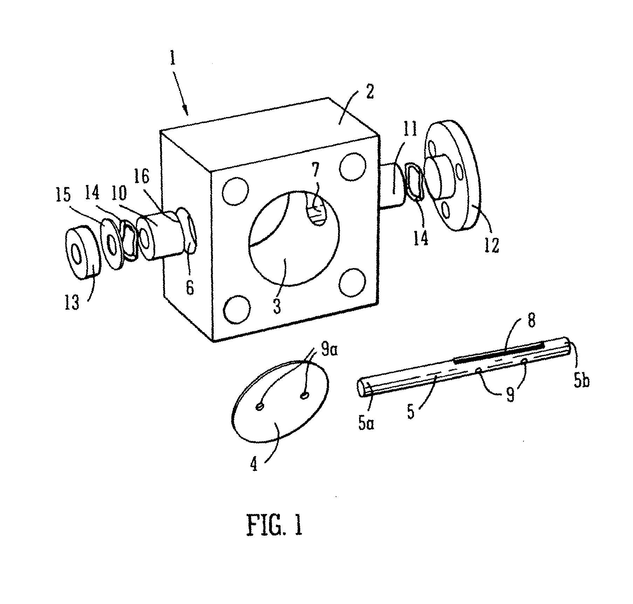

Figure 1 shows an explode schematic view of a butterfly valve in accordance with an embodiment of the present invention;
Figure 2 shows a perspective schematic view of the assembled butterfly valve of Figure 1;
Figure 3 shows a perspective schematic view of the butterfly valve of Figure 1, in cross-section perpendicular to an axis of rotation of the butterfly valve member;
Figure 4 shows a perspective view of the butterfly valve of Figure 1, in cross-section parallel to an axis of rotation of the butterfly valve member;

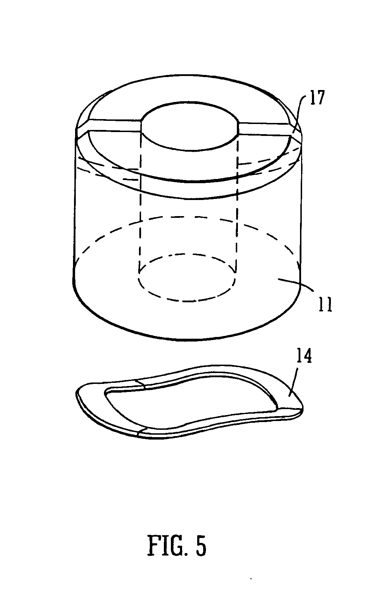

Figure 5 shows a semi-transparent perspective schematic view of a bush and washer of the butterfly valve of Figure 1; and
Figure 6 shows a schematic diagram of a two-stage turbocharger system comprising a butterfly valve in accordance with the present invention.

Referring to the drawings, the illustrated butterfly valve, indicated generally by reference 1, comprises a housing 2 defining a generally cylindrical fluid flow conduit 3 therethrough. A butterfly valve member comprising a butterfly plate 4 is supported for rotation within the conduit 3 on an actuating shaft 5 which extends across the conduit 3 between laterally extending diametrically opposed shaft bores 6 and 7 (so that the axis of the shaft 5 extends along a diameter of the conduit). The shaft 5 is provided with a longitudinal slot 8 which receives the butterfly plate 4. The butterfly plate 4 may be secured to the shaft 5 by appropriate fasteners (such as rivets or screws - not shown) inserted through fixing holes 9 provided in the shaft and complementary fixing holes 9a provided in the butterfly plate 4.

An actuating end 5a of the shaft 5 extends through the shaft bore 6, and through a cylindrical bush 10 located within the bore 6, for connection to an actuator (not shown) which may be of any conventional form known to the skilled person - the nature of the actuator is not relevant to the present invention. The opposite and 5b of the shaft 5 extends into the shaft bore 7, through a cylindrical bush 11 located within the bore 7.

The shaft bore 7 is closed by an end cap 12 which seals the shaft bore 7. An annular wave spring 14 is located between the end cap 12 and the bush 11 to urge the bush 11 towards the butterfly valve plate 4 as will be discussed in more detail below. The shaft end 5a is sealed with respect to the shaft bore 6 by annular seal member 13 which may for instance be a press fit in the end of the bore 7. An annular wave spring 14 is located between the bush 10 and the seal member 13, being separated from the seal 13 by a washer 15, to urge the bush 10 towards the butterfly valve plate 4 as will also be discussed in more detail below.

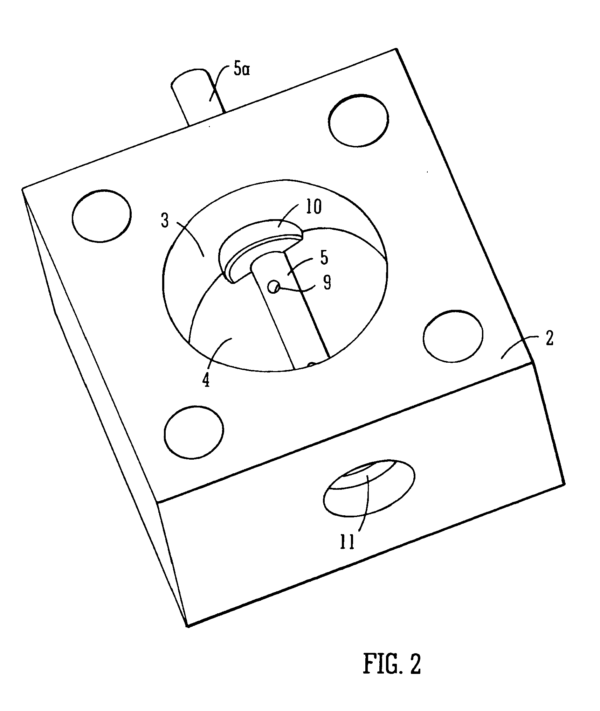

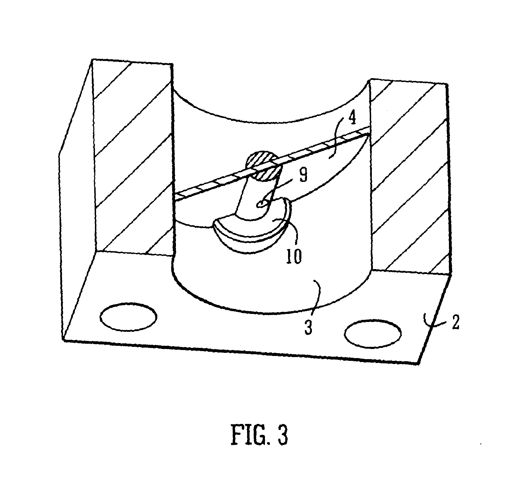

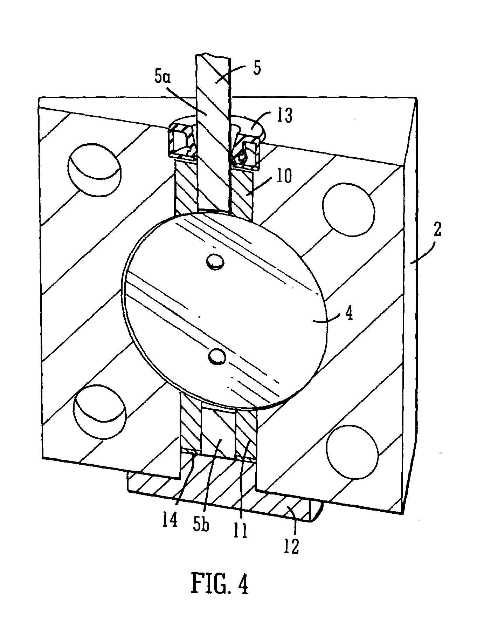

The inboard axially facing end of each bush 10 and 11 extends a short distance into the conduit 3 and is provided with a radially extending slot, 16 and 17 respectively, dimensioned to receive the peripheral edge of the butterfly plate in the region of the shaft 5. The bushes 10 and 11 are thereby coupled to the butterfly plate with the inboard ends of the bushes 10 and 11 overlapping the peripheral edge of the butterfly plate 4. The wave springs 14 urge the bushes 10 and 12 towards the butterfly plate 4 to maintain the bushes 10 and 11 in good contact with the butterfly plate 4. The bushes 10 and 11 are thus keyed to the butterfly valve plate 4 so as to rotate therewith, which eliminates relative moment between the butterfly plate 4 and the conduit wall in the region of the butterfly plate periphery closest to the shaft axis. This avoids the need to maintain a clearance gap in this region which can otherwise provide a leakage path when the butterfly valve is in a closed position as illustrated in Figures 2 to 4.

It will be appreciated that other forms of coupling could be provided to key the bushes 10 and 11 to the butterfly valve member, for instance radially extending protrusions provided by the butterfly valve member could extend into complementary shaped recesses in the bushes (or vice versa). However, the slotted coupling of the preferred embodiment described above, which keys the bushes to the butterfly plate, is advantageously simply to construct and assemble. Moreover the tortuous interface between the butterfly plate and slot where the bushes overlap the plate resists any leakage flow between the two. Any potential for leakage flaw could be reduced further by dimensioning the slot so as to be an interference fit with the butterfly plate and by complementary contouring of the base of the slot and periphery of the butterfly plate that is received within the slot.

It will be appreciated that with an alternative form of coupling either one or both of the bushes 10 and 11 may not extend into the conduit 3. For instance the periphery of the butterfly plate may have radially projecting portions that extend into the shaft bore 6 and/or 7 and into engagement with a bush which terminates adjacent the open end of the bores 6 and/or 7 (the bush may for example have a slot to receive said projection).

The bushes 10 and 11 may be fabricated from any appropriate material such as a metal or plastics material. The resilience of a plastics bush may help provide a good gas tight coupling between the bush and the butterfly plate.

In the illustrated embodiment the bushes 10 and 11 provide journal bearing surfaces for rotational support of the shaft 5 with the shaft bores 6 and 7. In alternative embodiments separate journal bearings may be provided.

The wave washers which urge the bushes 10 and 11 towards the butterfly valve member may be replaced with other resilient biasing means, such as coil springs for Instance, or may be omitted entirely in some embodiments of the invention.

It will be appreciated that the manner in which the butterfly plate 4 is supported on the shaft may vary from that illustrated. For instance, although the butterfly plate 4 of the illustrated embodiment of the invention is supported by a single shaft 5, in alternative embodiments the butterfly plate may be supported on two separate shafts extending into respective shaft bores on opposite sides of the butterfly plate 4. Such shafts could be coupled to the butterfly valve plate in various ways, including for instance a keyed coupling similar to the slotted coupling provided between the bushes 10 and 11 and the butterfly plate 4 described above. The shaft and butterfly plate could even be of unitary construction provided the housing is suitable configured to permit assembly. In other embodiments of the invention the shaft may be a non-rotating spindle on which the butterfly valve member rotates, the butterfly plate wings for instance extending from a central cylindrical hub which rotates on the spindle. In such embodiments bushes 10 and 11 could provide a link between the butterfly valve member and an appropriate actuator for rotation of the valve member.

It will be appreciated that the exact form of the seals which seal the bores 6 and 7, and specific details of the valve housing and butterfly valve member, may vary from those indicated. For instance in the illustrated embodiment the butterfly valve plate is oval so that it extends at an angle of about 15 degrees to a radial plane through the conduit 3 when in a fully closed position as shown in Figures 2 to 4. In an alternative embodiment the butterfly valve plate may be circular (corresponding to the circular cross-section of the conduit 3) and the surface of the conduit may be provided with a generally annular sealing rib against which the periphery of the butterfly plate bears when in a fully closed position. These different forms of butterfly valve will be familiar to the skilled person. Similarly the conduit need not necessarily have a circular cross section provided an appropriately shaped butterfly plate can freely rotate within the conduit between required open and closed positions.

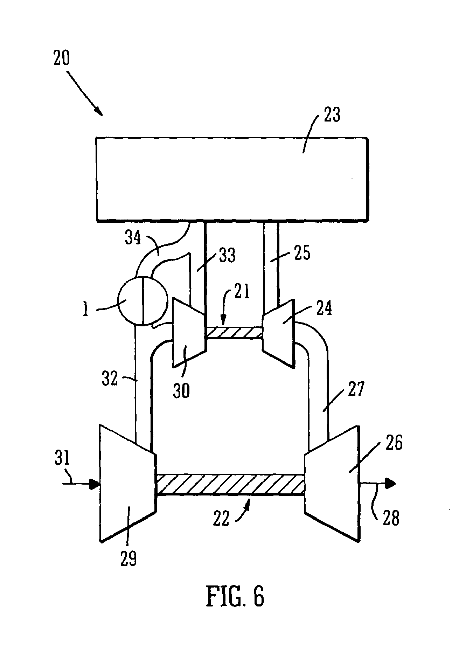

Butterfly valves according to the present invention may be used in many different applications in which a conventional butterfly valve is used. For instance, as mentioned above, the butterfly valve may be used as a bypass valve in a multi-stage turbocharger system. An example of such an application is schematically is illustrated in Figure 6 which shows a butterfly valve 1 according to the present invention incorporated within a two-stage turbocharger system 20.

The turbocharger system 20 comprises a relatively small high pressure turbocharger 21 and a relatively large low pressure turbocharger 22 connected in series to an engine 23 (for instance a diesel or other internal combustion engine). Exhaust gas from the engine 23 flows first through the smaller turbine 24 of the high pressure turbocharger 21 via an exhaust conduit 25 and then through the larger turbine 26 of the low pressure turbocharger 22 via exhaust conduit 27, before delivery to a downstream exhaust system (not shown) via exhaust conduit 28. In a typical system a valve controlled bypass exhaust conduit (not shown) may be provided to divert some exhaust gas flow around high pressure turbine 24 in certain operating conditions.

Similarly, charge air is supplied to the engine 23 through first the larger compressor 29 of the low pressure turbocharger 22 and then the smaller compressor 34 of the high pressure turbocharger 21. Charge air flows into the low pressure compressor 29 through inlet air conduit 31 and exits the low pressure compressor through air conduit 32 which connects to the inlet of the high pressure compressor 30. An air conduit 33 connects the outlet of the high pressure compressor 30 to the engine 23. A high pressure compressor bypass conduit 34 branches from the air conduit 33 upstream of the high pressure compressor 30 and connects to the air conduit 33 downstream of the high pressure compressor 30 to permit some air flow to bypass the high pressure compressor 30 in some operating conditions. The amount of air flow through the bypass conduit 34 is controlled by a butterfly valve 1 in accordance with the present invention.

For example, at low engine speeds and/or loads the valve 1 may be fully closed to block the bypass conduit 34 so that all air is flowed through the high pressure compressor 30. The butterfly valve 1 in accordance with the present invention provides a good gas seal which prevents (or at least substantially prevents) relatively hot high-pressure air from air conduit 33 recirculating through bypass conduit 34 to mix with the lower pressure and cooler air at the inlet of the high pressure compressor 30. Such recirculation would otherwise increase thermal loading on the high pressure compressor 30 reducing the efficiency of the compressor 30 and thus of the turbocharger system 20 as a whole.

Other possible modifications to the embodiments of the invention described above, and other possible applications of a butterfly valve in accordance with the present invention, will be readily apparent to the appropriately skilled person.

## Claims

1. A butterfly valve comprising:
a housing defining a fluid flow conduit;
a butterfly valve member supported on a shaft for rotation about an axis extending across said conduit to control fluid flow through said conduit;
a portion of said shaft extending into a shaft bore provided in said housing and
extending laterally from said conduit; and
an annular bush located around said shaft within said bore;
wherein said bush is coupled to the butterfly valve member for rotation therewith about said axis.

2. A butterfly valve according to claim 1, wherein said shaft extends across said conduit along said axis from one laterally extending bore to an opposite laterally extending bore, an annular bush being disposed around the shaft within each bore, wherein the or each bush is coupled to the butterfly valve for rotation therewith.

3. A butterfly valve according to claim 1, wherein the butterfly valve member is rotatably supported on a first shaft extending into a first bore extending laterally from the conduit, and a second shaft extending into a second bore extending laterally from said conduit opposite said first bore, first and second annular busbes being disposed between said first and second shafts within said first and second bores, wherein the or each bush is coupled to the butterfly valve member for rotation therewith.

4. A butterfly valve according to any preceding claim, wherein said shaft or said first shaft is an actuating shaft rotatably mounted within said bore, the butterfly valve member being supported on said shaft for rotation therewith.

5. A butterfly according to any preceding claim, wherein an end portion of the or each each bush extends into said conduit.

6. A butterfly valve according to any preceding claim, wherein an end portion of the or each bush overlaps said butterfly valve member.

7. A butterfly valve according to any preceding claim, wherein an end portion of the or each bush is keyed to the butterfly valve member.

8. A butterfly valve according to claim 7, wherein the butterfly valve member comprises a butterfly plate defining a peripheral edge, and wherein an end portion of the or each bush is provided with a slot configured to receive a portion of said peripheral edge.

9. A butterfly valve according to any preceding claim, further comprising resilient biasing means for urging the or each bush into contact with said butterfly valve member.

10. A butterfly according to claim 9, wherein said resilient biasing means comprises a spring positioned within the or each bore for biasing a respective bush.

11. A turbocharger system comprising:
a first relatively small turbocharger;
a second relatively large turbocharger;
the first turbocharger comprising a first compressor situated in a first air conduit;
the second tubocharger comprising a second compressor situated in said fist air conduit downstream of said first compressor;
an air bypass conduit comunicating with said first air conduit upstream and
downstream of said first compressor; and
a butterfly valve according to any preceding claim located in the bypass conduit for controlling air flow through the bypass conduit.
